# EUROPÄISCHE PATENTSCHRIFT

(11) **EP 3 562 291 B1**
(45) Veröffentlichungstag und Bekanntmachung des Hinweises auf die Patenterteilung: **02.12.2020**
(21) Anmeldenummer: 17835660.6
(22) Anmeldetag: 19.12.2017
(51) Int. Cl.: A01C 21/00

(54) **DÜNGESYSTEM FÜR AGRARBÖDEN**
FERTILISING SYSTEM FOR AGRICULTURAL SOIL
SYSTÈME DE FERTILISATION POUR SOL AGRICOLE

(30) Priorität: 29.12.2016 DE 102016226292
(43) Veröffentlichungstag der Anmeldung: 06.11.2019
(73) Patentinhaber: Robert Bosch GmbH, 70442 Stuttgart (DE)
(72) Erfinder: BUCHTALA, Boris, 75417 Muehlacker (DE); FEHSE, Jochen, 71292 Friolzheim (DE); LINK-DOLEZAL, Johanna, 73770 Denkendorf (DE); FALCK, Tillmann, 70178 Stuttgart (DE)
(86) Internationale Anmeldenummer: PCT/EP2017/083485
(87) Internationale Veröffentlichungsnummer: WO 2018/122032

(56) Entgegenhaltungen:
- WO-A1-2011/102739
- WO-A1-2013/181069

## Beschreibung

Die Erfindung betrifft ein Düngesystem für Agrarböden, mit einer Ausbringeinrichtung zum Ausbringen von Düngemittel und mit einer Testeinrichtung zum Erfassen eines Lachgasgehalts in oder auf dem zu düngenden Agrarboden.

### Stand der Technik

Um den Ernteertrag zu erhöhen und/oder eine gewünschte Qualität des Ertrags zu gewährleisten, ist es bekannt, Agrarböden mit Düngemitteln zu versehen. In der landwirtschaftlichen Produktion werden dabei häufig stickstoffhaltige Düngemittel, wie beispielsweise Ammonium- und/oder Nitratbasierte Düngemittel, verwendet. Diese Düngemittel können durch mikrobielle Umsetzungsprozesse wie der Nitrifikation und der Denitrifikation im Boden in Lachgas (N₂O) umgewandelt werden. Die Effizienz des Düngemitteleinsatzes liegt dabei bei allenfalls 50 %, das heißt, nur etwa die Hälfte des eingesetzten Stickstoffs kann von den Pflanzen tatsächlich genutzt werden. Der Rest geht verloren und landet unter anderem als Lachgas in der Atmosphäre.

Landwirtschaftlich genutzte Böden (Agrarböden) sind somit eine signifikante Quelle für Lachgas-Emissionen. Lachgas selbst ist als klimaschädliches Treibhausgas bekannt. Die Bildung von Lachgas ist neben der ausgebrachten Düngemenge und Düngeart insbesondere von weiteren Bodenparametern, wie beispielsweise den mineralisierten Stickstoff oder organisch gebundener Kohlenstoff, dem Anteil an wassergefüllten Porenraum, der Temperatur und dem pH-Wert des Bodens, abhängig und unterliegt damit komplexen Wechselwirkungen.

Die Veröffentlichung WO 2011/102739 A1 offenbart ein Düngesystem nach dem Oberbegriff des Anspruchs 1 mit Lachgassensoren, die an der Ausbringeinrichtung angebracht sind.

### Offenbarung der Erfindung

Das erfindungsgemäße Düngesystem mit den Merkmalen des Anspruchs 1 hat den Vorteil, dass Änderungen von Lachgas-Emissionen aus dem Agrarboden automatisiert erfasst und bei dem Düngemittelmanagement unter Berücksichtigung von komplexen Wechselwirkungen innerhalb des Agrarbodens beziehungsweise des Feldes berücksichtigt werden können. Hierzu sieht die Erfindung vor, dass das Düngesystem mehrere Lachgassensoren mit jeweils einer ersten Sendeeinrichtung zum Übermitteln von Messdaten aufweist, sowie eine Datenverarbeitungseinrichtung, die eine erste Empfangseinrichtung zum Empfangen der Messdaten, die von der jeweiligen ersten Sendeeinrichtung gesendet wurden, aufweist. Hierdurch wird erreicht, dass an mehreren Stellen im Agrarboden der Lachgasgehalt erfasst oder überwacht und der zentralen Datenverarbeitungseinrichtung zur Verfügung gestellt wird, welche in Abhängigkeit der erfassten Werte beispielsweise den Düngemittelbedarf und/oder die Art des Düngemittels bestimmt. Hierdurch ist eine vorteilhafte Düngung des Agrarbodens, die auch klimaschädliche Einflüsse berücksichtigt, gewährleistet.

Gemäß einer bevorzugten Weiterbildung der Erfindung ist vorgesehen, dass die Datenverarbeitungseinrichtung speziell dazu hergerichtet ist, in Abhängigkeit von den empfangenen Messdaten eine von der Einrichtung auszubringende Düngemittelmenge zu bestimmen. Weiter wird erreicht, dass die Düngemittelmenge und optional die Düngemittelart optimal auf den Zustand des Agrarbodens angepasst wird.

Weiterhin ist bevorzugt vorgesehen, dass die Datenverarbeitungseinrichtung zumindest eine zweite Sendeeinrichtung zum Senden von Messdaten oder der bestimmten Düngemittelmenge und die Ausbringeinrichtung eine zweite Empfangseinrichtung zum Empfangen der Messdaten oder der bestimmten Düngemittelmenge aufweist. Damit empfängt die Ausbringeinrichtung entweder Daten über den Lachgasgehalt im Boden, und entscheidet dann mittels eines eigenen Algorithmus über die auszubringende Düngemittelmenge, oder sie erhält bereits von der Datenverarbeitungseinrichtung die bereits vorgefertigte Information über die auszubringende Düngemittelmenge.

Weiterhin ist bevorzugt vorgesehen, dass die Lachgassensoren als Infrarot-Gassensoren ausgebildet sind. Derartige Gassensoren sind beispielsweise bereits für den Einsatz zum Erfassen von Kohlenstoffdioxid in Kraftfahrzeugen bekannt. Zur Anwendung als Lachgassensoren wird bevorzugt der Filter der Sensoren im nahen Infrarotbereich für die Lachgaserfassung angepasst.

Erfindungsgemäß ist vorgesehen, dass die ersten Sendeeinrichtungen dazu ausgebildet sind, zusätzlich zu den Messdaten Positionsdaten, die den jeweiligen Lachgassensor betreffen, zu übermitteln. Dadurch erhält die Datenverarbeitungseinrichtung nicht nur grundsätzlich die Information über den Lachgasgehalt, sondern auch gleich die Information darüber, wo dieser Lachgasgehalt festgestellt wurde. In einer nicht erfindungsgemäßen Ausführungsalternative übermittelt der jeweilige Lachgassensor eine Identifikationsnummer oder -kennzeichnung und die Datenverarbeitungseinrichtung verbindet die Identifikation des jeweiligen Lachgassensors mit einer diesem Sensor zugeordneten Position, die beispielsweise zuvor manuell oder automatisiert beim Setzen des jeweiligen Lachgassensors eingegeben wurde.

Weiterhin ist bevorzugt vorgesehen, dass die Einrichtung als selbstfahrende Düngemitteleinrichtung ausgebildet ist, die in Abhängigkeit von der oder dem bestimmten Düngemittelmenge(n) und den Positionsdaten das Düngemittel autonom ausbringt. Dadurch ist ein automatisierter Düngebetrieb durch das Düngesystem gewährleistet, der den Lachgasgehalt im Boden berücksichtigt. Alternativ ist die Einrichtung als gezogene oder ziehbare Düngemitteleinrichtung, beispielsweise als Anhänger für einen Traktor, ausgebildet.

Weiterhin ist bevorzugt vorgesehen, dass die Datenverarbeitungseinrichtung als lokale Steuereinrichtung oder als zentrales Datenzentrum dazu ausgebildet ist, die Daten mehrerer Düngesysteme zu verarbeiten. In Ausbildung als lokale Steuereinrichtung ist somit die Datenverarbeitungseinrichtung beispielsweise an der Ausbringeinrichtung selbst angeordnet und steuert diese somit lokal.

Alternativ ist die Datenverarbeitungseinrichtung lokal auf dem Feld oder dem Feld zugehörig angeordnet und nur für das eine Düngesystem zuständig. Gemäß einer zweiten Ausführungsform ist vorgesehen, dass die Datenverarbeitung zentral für mehrere Düngesysteme arbeitet und dadurch beispielsweise Rechenleistung bündelt. So kann beispielsweise das zentrale Datenverarbeitungssystem dazu ausgebildet sein, mit Hochleistungsrechnern den Lachgasgehalt und die jeweiligen Wechselwirkungen, die in dem jeweiligen Agrarboden stattfinden, auszuwerten und entsprechend die Düngemittelmenge für das jeweilige Feld oder Düngesystem zu bestimmen. Weil derartige Rechnungen verhältnismäßig komplex sind, ist durch die Auslagerung der Berechnung in ein zentrales System für mehrere Anwender eines entsprechenden Düngesystems eine Kostensenkung möglich, ohne Nachteile bei der Düngemittelausbringung.

Weiterhin ist bevorzugt vorgesehen, dass die Datenverarbeitungseinrichtung dazu ausgebildet ist, die erfassten Messdaten und optional die bestimmten Düngemittelmengen in Abhängigkeit der Sensorpositionen zu speichern und die gespeicherten Informationen optional bei der Bestimmung einer aktuellen Düngemittelmenge zu berücksichtigen. Hierdurch wird beispielsweise erreicht, dass die Düngung des Agrarbodens über einen längeren Zeitraum verfolgt und archiviert wird, sodass in Kenntnis des bereits vorhandenen Düngemittels im Agrarboden die Düngemittelstrategie beziehungsweise die Bestimmung des auszugebenden Düngemittels angepasst werden kann, um eine optimale Bedüngung zu erreichen.

Ein nicht beanspruchtes Verfahren zeichnet sich dadurch aus, dass der Lachgasgehalt im Agrarboden mittels der Lachgassensoren an unterschiedlichen Stellen das Agrarboden erfasst und aus den erfassten Werten ein oder mehrere Düngemittelmengen für den Agrarboden, insbesondere in Abhängigkeit der Position des jeweiligen Lachgassensors, bestimmt werden. Es ergeben sich hierdurch die bereits genannten Vorteile.

Insbesondere ist vorgesehen, dass die Ausbringeinrichtung dazu angesteuert wird, die bestimmte Düngemittelmenge teil- oder vollautomatisiert auszubringen.

Hierdurch wird sichergestellt, dass die optimale Düngemittelmenge den Agrarboden erreicht.

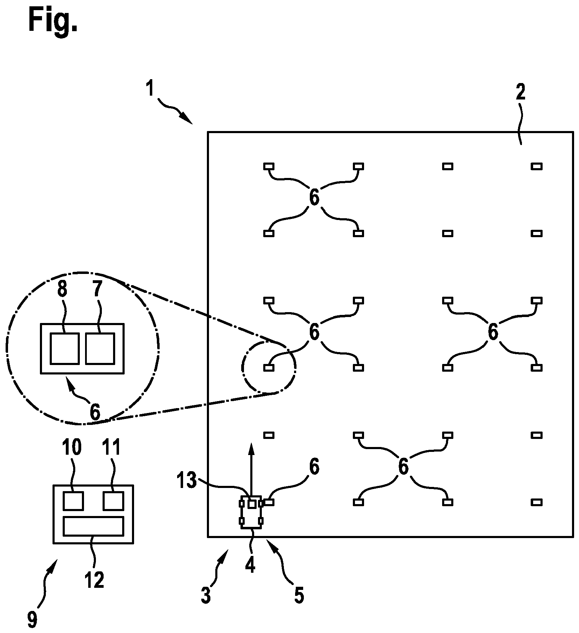

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigt die einzige
- Figur: ein Agrarfeld mit einem Düngesystem in einer vereinfachten Darstellung.

Die einzige Figur zeigt in einer vereinfachten Draufsicht ein Agrarfeld 1, das einen Agrarboden 2 aufweist, auf welchem Nutzpflanzen gepflanzt werden. Dem Agrarfeld 1 ist ein Düngesystem 3 zugeordnet, das eine fahrbare Ausbringeinrichtung 4, beispielsweise ein Traktor, sowie eine Testeinrichtung 5 aufweist. Die Ausbringeinrichtung 4 ist dazu ausgebildet, insbesondere granulares oder flüssiges Düngemittel auf dem Agrarfeld 1 zu verteilen. Die Testeinrichtung 5 ist dazu ausgebildet, einen Lachgasgehalt in dem Agrarboden 2 zu erfassen. Dazu weist die Testeinrichtung 5 mehrere Lachgassensoren 6 auf, die über das Feld matrixartig verteilt sind. Aus Übersichtlichkeitsgründen sind nur einige der Lachgassensoren 6 mit Bezugszeichen versehen.

Die Lachgassensoren 6 entsprechen in ihrem Aufbau im Wesentlichen dem Aufbau bekannter Kohlenstoffdioxidsensoren, mit dem Unterschied, dass ihr Filter im nahen Infrarotbereich für die Erfassung des Lachgases angepasst ist und das Sensorsystem für den Einsatz im Agrarboden angepasst wurde. Die Lachgassensoren 6 weisen jeweils neben der eigentlichen Sensorik 7 zum Erfassen des Lachgases außerdem eine Sendeeinrichtung 8 auf. Diese ist dazu ausgebildet, die von dem Lachgassensor 6 erfasste Lachgaskonzentration im Agrarboden an eine Datenverarbeitungseinrichtung 9 der Testeinrichtung 5 zu senden. Die Datenverarbeitungseinrichtung 9 ist vorliegend als lokale Datenverarbeitung ausgebildet und weist eine Empfangseinrichtung 10 zum Empfangen der von den Lachgassensoren 6 gemessenen Messdaten. Mittels einer Recheneinheit 11 bestimmt die Datenverarbeitungseinrichtung 9 in Abhängigkeit der empfangenen Messdaten eine von der Ausbringeinrichtung 4 auszubringende Düngemittelmenge in Abhängigkeit von der Position der Ausbringeinrichtung 4 auf dem Feld 1.

Die Lachgassensoren 6 senden zusammen mit den jeweiligen Messdaten außerdem eine Position des jeweiligen Lachgassensors 6 mit, sodass die Datenverarbeitungseinrichtung 9 die empfangenen Messdaten einem der Lachgassensoren 9 jeweils zuordnen kann. In Kenntnis der Anordnung der Lachgassensoren 6 ist somit eine Lachgas-Karte erstellbar, in welcher der Lachgasgehalt beziehungsweise die Lachgasverteilung des Agrarbodens 2 innerhalb des Felds 1 bestimmt wird. Die aktuelle Position der Ausbringeinrichtung 4 wird insbesondere durch ein satellitengestütztes Navigationssystem laufend ermittelt.

In Kenntnis der aktuellen Position der Ausbringeinrichtung 4 wird nun die ausgegebene Düngemittelmenge in Abhängigkeit der dort jeweils vorherrschenden Lachgaskonzentration in dem Agrarboden 2 vorbestimmt, wobei die komplexen Wechselwirkungen innerhalb des Agrarbodens 2 und der Nährstoffbedarf der angebauten Kultur bei der Bestimmung der Düngemittelmenge berücksichtigt werden. Die Datenverarbeitungseinrichtung 9 kommuniziert dabei mit der Ausbringeinrichtung 4 mittels einer zweiten Sendeeinrichtung 12 und einer der Ausbringeinrichtung 4 zugeordneten Empfangseinrichtung 13. Die Datenverarbeitung 9 sendet dabei entweder die erfassten Messdaten der Lachgassensoren 6 oder bereits die vorbestimmte Düngemittelmenge an die Empfangseinrichtung 13. Die Einrichtung 4 die sich über das Feld 1 bewegt, gibt dann die vorbestimmte Düngemittelmenge an der vorab bestimmten Stelle auf den Agrarboden 2 aus.

Die Lachgassensoren erfassen eine Änderung des Lachgasgehalts im Agrarboden oder in der bodennahen Luft über eine längere Zeit, wobei die Änderungen bevorzugt durch die Datenverarbeitungsmaschine 9 gespeichert werden, in der Art eines Datenloggers, um den zeitlichen und räumlichen Verlauf der Lachgasemissionen des Feldes 1 abzubilden. Optional werden die übermittelten Daten zusätzlich an eine zentrale Datenverarbeitung oder einen Cloud-Dienst gesendet und dort gespeichert. Hier findet unter Berücksichtigung der gemessenen Lachgas-Emissionen und der bekannten Wechselwirkungen die Berechnung einer bedarfsgerechten Düngemenge für das Feld 1 statt. Die Düngeempfehlung wird an den Bordrechner oder ein Steuergerät der Ausbringeinrichtung 4 gesendet, beispielsweise durch die Datenverarbeitungseinrichtung 9, welches die Ausbringeinrichtung 4 dazu ansteuert, das Düngemittel bedarfsgerecht auszustreuen oder zu -sprühen.

Gemäß einem weiteren Ausführungsbeispiel ist vorgesehen, dass zusätzliche Informationen über das bisherige Düngemittel-Management des Feldes 1, historische Daten oder verfügbare Daten aus Internet-Services in die Berechnung einer bedarfsgerechten Düngemenge einfließen. Weiterhin ist es vorteilhaft, wenn die tatsächlich ausgebrachte Düngemittelmenge von der Ausbringeinrichtung 4 erfasst und an die Datenverarbeitung 9 oder den Cloud-Service gesendet wird, um das Düngemittel-Management des Feldes 1 zu dokumentieren.

## Patentansprüche

1. Düngesystem (3) für Agrarböden (2), mit einer Ausbringeinrichtung (4) zum Ausbringen von Düngemittel und mit einer Testeinrichtung (5) zum Erfassen eines Lachgasgehalts in oder auf dem zu düngenden Agrarboden (2) wobei die Testeinrichtung (5) mehrere Lachgassensoren (6) mit jeweils einer ersten Sendeeinrichtung (8) zum Übermitteln von Messdaten aufweist, und mit einer Datenverarbeitungseinrichtung (9), die eine erste Empfangseinrichtung (10) zum Empfangen der Messdaten aufweist, wobei der Lachgasgehalt mittels der Lachgassensoren (6) an unterschiedlichen Stellen des Agrarbodens (2) erfassbar ist und wobei aus den erfassten Werten ein oder mehrere Düngemittelmengen für den Agrarboden (2), insbesondere in Abhängigkeit der Position des jeweiligen Lachgassensors (6), bestimmbar sind, **dadurch gekennzeichnet, dass** die ersten Sendeeinrichtungen (8) dazu ausgebildet sind, zusätzlich zu den Messdaten Positionsdaten, die den jeweiligen Lachgassensor (6) betreffen, zu übermitteln.

2. Düngesystem nach Anspruch 1, **dadurch gekennzeichnet, dass** die Datenverarbeitungseinrichtung (9) speziell dazu hergerichtet ist, in Abhängigkeit von den empfangenen Messdaten eine von der Ausbringeinrichtung (4) auszubringende Düngemittelmenge zu bestimmen.

3. Düngesystem nach einem der vorhergehenden Ansprüche, **dadurch gekennzeichnet, dass** die Datenverarbeitungseinrichtung (9) zumindest eine zweite Sendeeinrichtung (12) zum Senden von Messdaten oder einer bestimmten Düngemittelmenge und die Ausbringeinrichtung (4) eine zweite Empfangseinrichtung (13) zum Empfangen der Messdaten oder der bestimmten Düngemittelmenge aufweist.

4. Düngesystem nach einem der vorhergehenden Ansprüche, **dadurch gekennzeichnet, dass** die Lachgassensoren (6) als Infrarot-Gassensoren ausgebildet sind.

5. Düngesystem nach einem der vorhergehenden Ansprüche, **dadurch gekennzeichnet, dass** die Ausbringeinrichtung (4) als selbstfahrende Düngemitteleinrichtung ausgebildet ist, die in Abhängigkeit von der oder den bestimmten Düngemittelmenge(n) und den Positionsdaten Düngemittel selbstständig ausbringt.

6. Düngesystem nach einem der vorhergehenden Ansprüche, **dadurch gekennzeichnet, dass** die Datenverarbeitungseinrichtung (9) als lokale Steuereinrichtung oder als zentrales Datenzentrum ausgebildet ist, das dazu dient, die Daten mehrerer Düngesysteme (3) zu bearbeiten.

7. Düngesystem nach einem der vorhergehenden Ansprüche, **dadurch gekennzeichnet, dass** die Datenverarbeitungseinrichtung (9) dazu ausgebildet ist, die erfassten Messdaten und optional die bestimmten und/oder ausgegebenen Düngemittelmengen in Abhängigkeit der Positionsdaten zu speichern und die gespeicherten Daten optional bei der Bestimmung einer neuen Düngemittelmenge zu berücksichtigen.

8. Düngesystem nach Anspruch 1, **dadurch gekennzeichnet, dass** die Ausbringeinrichtung (4) dazu ansteuerbar ist, die bestimmte Düngemittelmenge teil- oder vollautomatisiert auszubringen.

## Claims

1. Fertilizer system (3) for agricultural soils (2), having a spreading device (4) for spreading fertilizer, and having a testing device (5) for detecting a nitrous oxide content in or on the agricultural soil (2) which is to be fertilized, wherein the testing device (5) has several nitrous oxide sensors (6) each with a first transmitting device (8) for transmitting measured data, and with a data processing device (9) which has a first receiving device (10) for receiving the measured data, wherein the nitrous oxide content can be detected by the nitrous oxide sensors (6) at different places in the agricultural soil (2), and wherein one or more quantities of fertilizer can be determined from the detected values for the agricultural soil (2), in particular in dependence on the position of the respective nitrous oxide sensor (6), **characterized in that** the first transmitting devices (8) are designed to transmit in addition to the measured data also position data which relate to the respective nitrous oxide sensor (6).

2. Fertilizer system according to Claim 1, **characterized in that** the data processing device (9) is set up specifically to determine in dependence on the measured data received a quantity of fertilizer which is to be spread from the spreading device (4).

3. Fertilizer system according to one of the preceding claims, **characterized in that** the data processing device (9) comprises at least one second transmitting device (12) for transmitting measured data or a specific quantity of fertilizer, and the spreading device (4) comprises a second receiving device (13) for receiving the measured data or the specific quantity of fertilizer.

4. Fertilizer system according to one of the preceding claims, **characterized in that** the nitrous oxide sensors (6) are designed as infrared gas sensors.

5. Fertilizer system according to one of the preceding claims, **characterized in that** the spreading device (4) is designed as a self-propelled fertilizing device which automatically spreads out fertilizer in dependence on the or each determined quantity (quantities) of fertilizer and the position data.

6. Fertilizer system according to one of the preceding claims, **characterized in that** the data processing device (9) is designed as a local control device or as a central data centre, which serves to process the data of several fertilizer systems (3).

7. Fertilizer system according to one of the preceding claims, **characterized in that** the data processing device (9) is designed to store the detected measured data and optionally the determined and/or delivered quantities of fertilizer in dependence on the position data, and to take into consideration the stored data optionally when determining a new quantity of fertilizer.

8. Fertilizer system according to Claim 1, **characterized in that** the spreading device (4) can be controlled to spread the determined quantity of fertilizer in a partially or fully automated process.

## Revendications

1. Système de fertilisation (3) destiné aux terrains agricoles (2), comprenant un dispositif distributeur (4) destiné à la distribution d'engrais et un dispositif de test (5) destiné à détecter une teneur en protoxyde d'azote dans ou sur le terrain agricole (2) à fertiliser, dans lequel le dispositif de test (5) comporte plusieurs capteurs de protoxyde d'azote (6) pourvus respectivement d'un premier dispositif émetteur (8) pour la transmission de données de mesure, et comprenant un dispositif de traitement de données (9) qui comporte un premier dispositif récepteur (10) destiné à recevoir les données de mesure, dans lequel la teneur en protoxyde d'azote peut être détectée au moyen de capteurs de protoxyde d'azote (6) en différents points du terrain agricole (2) et dans lequel une ou plusieurs quantités d'engrais destinées au terrain agricole (2) peuvent être déterminées à partir des valeurs détectées, en particulier en fonction de la position du capteur de protoxyde d'azote (6) respectif, **caractérisé en ce que** les premiers dispositifs émetteurs (8) sont conçus pour transmettre, en plus des données de mesure, des données de position concernant le capteur de protoxyde d'azote (6) respectif.

2. Système de fertilisation selon la revendication 1, **caractérisé en ce que** le dispositif de traitement de données (9) est spécialement adapté pour déterminer une quantité d'engrais devant être distribuée par le dispositif distributeur (4) en fonction des données de mesure reçues.

3. Système de fertilisation selon l'une des revendications précédentes, **caractérisé en ce que** le dispositif de traitement de données (9) comporte au moins un second dispositif émetteur (12) destiné à transmettre des données de mesure ou une quantité déterminée d'engrais et **en ce que** le dispositif distributeur (4) comporte un second dispositif récepteur (13) destiné à recevoir les données de mesure ou la quantité déterminée d'engrais.

4. Système de fertilisation selon l'une des revendications précédentes, **caractérisé en ce que** les capteurs de protoxyde d'azote (6) sont réalisés sous la forme de capteurs de gaz à infrarouge.

5. Système de fertilisation selon l'une des revendications précédentes, **caractérisé en ce que** le dispositif distributeur (4) est réalisé sous la forme d'un dispositif automoteur de distribution d'engrais qui distribue automatiquement l'engrais en fonction de la ou des quantité(s) d'engrais déterminée(s) et des données de position.

6. Système de fertilisation selon l'une des revendications précédentes, **caractérisé en ce que** le dispositif de traitement de données (9) est réalisé sous la forme d'un dispositif de commande local ou d'un centre de données central qui sert à traiter les données de plusieurs systèmes de fertilisation (3).

7. Système de fertilisation selon l'une des revendications précédentes, **caractérisé en ce que** le dispositif de traitement de données (9) est conçu pour stocker les données de mesure détectées et, facultativement, les quantités d'engrais déterminées et/ou distribuées en fonction des données de position et pour prendre en compte les données stockées, facultativement, lors de la détermination d'une nouvelle quantité d'engrais.

8. Système de fertilisation selon la revendication 1, **caractérisé en ce que** le dispositif distributeur (4) peut être commandé pour distribuer de manière partiellement ou entièrement automatisée la quantité d'engrais déterminée.
